# EUROPÄISCHE PATENTSCHRIFT

(11) **EP 4 578 281 B1**
(45) Veröffentlichungstag und Bekanntmachung des Hinweises auf die Patenterteilung: **18.03.2026**
(21) Anmeldenummer: 23220579.9
(22) Anmeldetag: 28.12.2023
(51) Int. Cl.: A01M 29/24, A01M 29/18, A01M 29/20

(54) **HOCHSPANNUNGSKABEL FÜR KLEINSÄUGERABWEHRVORRICHTUNG UND KLEINSÄUGERABWEHRVORRICHTUNG MIT DERARTIGEM HOCHSPANNUNGSKABEL**
HIGH-VOLTAGE CABLE FOR SMALL MAMMAL DEFENCE DEVICE AND SMALL MAMMAL DEFENCE DEVICE COMPRISING SUCH A HIGH-VOLTAGE CABLE
CÂBLE HAUTE TENSION POUR DISPOSITIF DE DÉFENSE CONTRE LES PETITS MAMMIFÈRES ET DISPOSITIF DE DÉFENSE CONTRE LES PETITS MAMMIFÈRES UTILISANT UN TEL CÂBLE HAUTE TENSION

(43) Veröffentlichungstag der Anmeldung: 02.07.2025
(73) Patentinhaber: K&K Handelsgesellschaft mbH, 68723 Oftersheim (DE)
(72) Erfinder: Schuster, Nicole, 68723 Oftersheim (DE)
(74) Vertreter: Isarpatent

(56) Entgegenhaltungen:
- EP-A1- 3 031 321
- DE-U1- 202014 103 573
- JP-A- 2013 247 863
- JP-A- 2013 247 864
- JP-A- 2023 074 125

## Beschreibung

### TECHNISCHES GEBIET DER ERFINDUNG

Die Erfindung betrifft ein Hochspannungskabel zur Abgabe von Kleinsäuger vergrämenden Hochspannungspulsen. Die Erfindung betrifft weiterhin eine Kleinsäugerabwehrvorrichtung, insbesondere für die Verwendung in einem Motorraum eines Kraftfahrzeugs oder in Gebäuden, mit einem oder mehreren derartigen Hochspannungskabeln. Ferner betrifft die Erfindung ein Verfahren zum Betreiben einer in einem Kraftfahrzeug eingebauten Kleinsäugerabwehrvorrichtung mit Hochspannungskabeln zur Abgabe von Kleinsäuger vergrämenden Hochspannungspulsen.

### TECHNISCHER HINTERGRUND

Kleinsäuger, insbesondere Marder, können durch Verbiss von Kabeln und Schläuchen, insbesondere im Motorraum eines Fahrzeuges, erhebliche Beschädigungen verursachen. Dringt beispielsweise ein Marder in den Motorraum eines geparkten Fahrzeuges ein, kann er elektrische Kabel, beispielsweise das Zündkabel, und sonstige Gummischläuche beschädigen, so dass die Fahrtüchtigkeit und Sicherheit des Fahrzeuges beeinträchtigt werden kann.

Es sind Abwehrsysteme zur Abwehr von Kleinsäugern verbreitet, die über unterschiedliche Abwehrmechanismen zur Abwehr von Kleinsäugern verfügen. Die Abwehrmechanismen umfassen Aktoreinheiten, die auf einen in den Motorraum eindringenden Kleinsäuger derart einwirken, dass dieser den Motorraum wieder verlässt. Hierzu erzeugen herkömmliche Abwehrsysteme akustische und/oder optische Signale, welche einen eindringenden Kleinsäuger derart stören, dass er den Motorraum des Fahrzeuges verlässt. Bekannte Abwehrsysteme können beispielsweise Ultraschallgeneratoren verwenden, welche Ultraschallsignale zur Vertreibung des Kleinsäugers aus dem Motorraum ausstrahlen. Alternativ oder zusätzlich dazu können herkömmliche Abwehrsysteme zur Abwehr von Kleinsäugern mit Aktoreinheiten ausgestattet sein, die unter Hochspannung stehen und bei Berührung durch den Kleinsäuger einen Elektroschock an den Kleinsäuger abgeben, um diesen zu vertreiben. Wieder andere Abwehrsysteme nutzen Lichtblitze, um die nachtaktiven Marder zu blenden, zu irritieren und schließlich zu verscheuchen.

In beiden Fällen ist zur Erzeugung der Ultraschallsignale bzw. zur Erzeugung der elektrischen Hochspannung eine Stromquelle notwendig, die die jeweiligen Generatoren bzw. Aktoreinheiten mit elektrischer Energie versorgt. Dazu existieren prinzipiell zwei Möglichkeiten: Entweder können die Generatoren bzw. Aktoreinheiten über separate Stromleitungen mit einer externen Stromquelle wie beispielsweise einer Fahrzeugbatterie verbunden werden (zentrale Energieversorgung), die Generatoren bzw. Aktoreinheiten können jeweils über eigene den einzelnen Generatoren bzw. Aktoreinheiten zugeordnete und lokal vorgesehene Stromquellen wie etwa Batterien oder Akkus verfügen (dezentrale Energieversorgung) oder Aktoreinheiten selbst können über eigene Stromquellen verfügen (zelluläre Energieversorgung).

Im Falle zentraler und dezentraler Energieversorgung sind in der Regel mehrere Aktoreinheiten mit einer Stromquelle über ein oder mehrere Kabel verbunden. Für den Betrieb eines Kleinsäugerabwehrgerätes im Motorraum von Fahrzeugen ist insbesondere in modernen Fahrzeugen mit knapp bemessenem Bauraum und verkapselten Motorbauteilen ein Einbau mit erheblichen Schwierigkeiten verbunden. Zudem limitieren die durch die Verkabelung bedingten Randbedingungen (wie etwa vorgegebene Zuleitungskabellänge, notwendige Verlegung abseits von rotierenden oder heißen Motorelementen und dergleichen) die möglichen Anbringungsstellen für die Aktoreinheiten. Häufig können die für eine erfolgreiche Kleinsäugerabwehr strategisch wichtigen Punkte im Motorraum (beispielweise die Laufwege und/oder Eintrittsstellen der Kleinsäuger) aufgrund dieser limitierenden Randbedingungen nicht oder nur mit erhöhtem Montageaufwand mit Aktoreinheiten bestückt werden.

Die Druckschriften EP 4 122 320 A1 und EP 3 031 321 A1 offenbaren beispielsweise Abwehrsysteme zur Abwehr von Kleinsäugern mit mindestens einer Hochspannungsaktoreinheit, die auf einen in einen überwachten Raum, insbesondere Motorraum, eindringenden Kleinsäuger derart einwirkt, dass der Kleinsäuger diesen Raum verlässt. Die Hochspannungsaktoreinheit weist Elektroden auf, die bei Berührung durch einen Kleinsäuger eine Hochspannung an diesen Kleinsäuger abgeben.

Die Druckschrift EP 3 031 321 A1 zeigt ein Hochspannungskabel 3, welches einen aus einem elektrisch isolierenden Material gefertigten Grundkörper umfasst, mit einer ersten und einer zweiten elektrisch leitfähigen Hochspannungsleitung, welche entlang einer Längserstreckung des Hochspannungskabels vollständig innerhalb des Grundkörpers verlaufen.

### ZUSAMMENFASSUNG DER ERFINDUNG

Eine der Aufgaben der Erfindung liegt demnach darin begründet, Lösungen für die Ausgestaltung von Hochspannungsaktoreinheiten von Kleinsäugerabwehrgeräten zu finden, welche platzsparend und an strategisch wichtigen Stellen im Motorraum eines Kraftfahrzeugs flexibel anbringbar sind. Zudem kann eine weitere der Aufgaben der Erfindung darin gesehen werden, die mögliche effektive Fläche zur Kleinsäugerabwehr bei geringerem Montageaufwand zu vergrößern.

Diese und andere Aufgaben werden durch ein Hochspannungskabel zur Abgabe von Kleinsäuger vergrämenden Hochspannungspulsen mit den Merkmalen des Anspruchs 1, durch eine Kleinsäugerabwehrvorrichtung mit den Merkmalen des Anspruchs 8 sowie durch ein Verfahren zum Betreiben einer in einem Kraftfahrzeug eingebauten Kleinsäugerabwehrvorrichtung mit den Merkmalen des Anspruchs 16 gelöst.

Gemäß einem ersten Aspekt der Erfindung umfasst ein Hochspannungskabel einen aus einem elektrisch isolierenden Material gefertigten Grundkörper, eine erste elektrisch leitfähige Hochspannungsleitung, welche im Wesentlichen entlang einer Längserstreckung des Hochspannungskabels zumindest abschnittsweise vollständig innerhalb des Grundkörpers verläuft, und eine zweite elektrisch leitfähige Hochspannungsleitung, welche im Wesentlichen parallel zu der ersten Hochspannungsleitung in einem Leitungsabstand zumindest abschnittsweise vollständig innerhalb des Grundkörpers verläuft. Die erste Hochspannungsleitung und die zweite Hochspannungsleitung ragen entlang der Längserstreckung des Hochspannungskabels an einer Vielzahl von Stellen durch eine im Wesentlichen senkrecht zur Längserstreckung des Hochspannungskabels stehende Oberfläche des Grundkörpers heraus. In manchen Ausführungsformen können derartige Hochspannungskabel als Hochspannungsaktoreinheiten einer Kleinsäugerabwehrvorrichtung in einem Motorraum eines Kraftfahrzeugs angeordnet werden.

Gemäß einem zweiten Aspekt der Erfindung umfasst eine Kleinsäugerabwehrvorrichtung mindestens ein Hochspannungskabel gemäß dem ersten Aspekt der Erfindung sowie einen Hochspannungsgenerator, welcher dazu ausgelegt ist, mindestens eine der Hochspannungsleitungen des Hochspannungskabels zu deren Betrieb mit elektrischer Hochspannung zu beaufschlagen. Elektroschocks sind eine wirksame Methode, gegen das Eindringen von Kleinsäugern in einen Motorraum eines Fahrzeugs vorzugehen. Bei Berührung mindestens einer der im Motorraum angebrachten und durch den Hochspannungsgenerator aufgeladenen Hochspannungsleitungen sowie der jeweils anderen Hochspannungsleitung und/oder eines geerdeten anderen Bauteils schließt sich für kurze Zeit ein Stromkreis und der Kleinsäuger erhält einen üblicherweise nicht letalen Stromschlag (Weidezaunprinzip).

Gemäß einem dritten Aspekt der Erfindung umfasst ein Verfahren zum Betreiben einer in einem Kraftfahrzeug eingebauten Kleinsäugerabwehrvorrichtung die Schritte des Verbindens eines einen Hochspannungsgenerator aufweisenden Gehäuses einer Kleinsäugerabwehrvorrichtung mit mindestens einem Hochspannungskabel, welches einen aus einem elektrisch isolierenden Material gefertigten Grundkörper, eine erste elektrisch leitfähige Hochspannungsleitung, welche im Wesentlichen entlang einer Längserstreckung des Hochspannungskabels zumindest abschnittsweise vollständig innerhalb des Grundkörpers verläuft, und eine zweite elektrisch leitfähige Hochspannungsleitung aufweist, welche im Wesentlichen parallel zu der ersten Hochspannungsleitung in einem Leitungsabstand zumindest abschnittsweise vollständig innerhalb des Grundkörpers verläuft, wobei die Hochspannungsleitungen entlang der Längserstreckung des Hochspannungskabels an einer Vielzahl von Stellen durch eine im Wesentlichen senkrecht zur Längserstreckung des Hochspannungskabels stehende Oberfläche des Grundkörpers herausragen; und des Beaufschlagens mindestens einer der ersten und zweiten Hochspannungsleitungen mit einer Hochspannung durch den Hochspannungsgenerator.

Einer der Vorteile des erfindungsgemäßen Hochspannungskabels besteht darin, dass die mit Spannung beaufschlagbaren Leiterbahnen des Hochspannungskabels zugleich die in Kontakt mit einem Kleinsäuger kommenden Aktorelektroden zur Abgabe von den Kleinsäuger vergrämenden Hochspannungspulsen darstellen. Dadurch kann auf separate Hochspannungsaktoreinheiten verzichtet werden, deren Montage aufwändig ist und deren Verwendung die mögliche effektive Abwehrfläche - das heißt, die Gesamtheit der Stellen, an denen Hochspannungspulse an einen Kleinsäuger abgegeben werden können - limitiert.

Besonders bei einem Einsatz eines erfindungsgemäßen Hochspannungskabels als Hochspannungsaktoreinheit für eine Kleinsäugerabwehrvorrichtung in einem Kraftfahrzeug ergibt sich durch die räumliche Unabhängigkeit der Kleinsäugerabwehrvorrichtung und die flexible Verlegungsmöglichkeit des erfindungsgemäßen Hochspannungskabels ein erheblicher Vorteil in der Montage der Kleinsäugerabwehrvorrichtung im Motorraum des Kraftfahrzeugs sowie eine signifikante Vergrößerung der effektiven Abwehrfläche. Zudem können nahezu beliebige Stellen im Motorraum mit dem als Hochspannungsaktoreinheit wirkenden Hochspannungskabel erreicht werden, ohne dass nur auf separate Hochspannungsaktoreinheiten an für eine Befestigung geeigneten und damit in begrenzter Anzahl verfügbaren Installationsorten zurückgegriffen werden muss.

Vorteilhafte Ausgestaltungen und Weiterbildungen ergeben sich aus den weiteren Unteransprüchen sowie aus der Beschreibung unter Bezugnahme auf die Figuren.

Gemäß einiger Ausführungsformen des Hochspannungskabels können die erste Hochspannungsleitung und die zweite Hochspannungsleitung aus Edelstahldraht oder Golddraht gefertigt sein. Edelstahl und Gold sind Metalle, die gegenüber Korrosion oder anderweitiger Verwitterung durch Kontakt mit Wasser, Schmutz oder Betriebsmitteln wie Öl oder Scheibenputzmittel im Kraftfahrzeug möglichst unempfindlich sind. Dadurch erhöht sich die Ausfallsicherheit und die Betriebstüchtigkeit einer mit dem Hochspannungskabel bestückten Kleinsäugerabwehrvorrichtung erheblich.

Gemäß einiger weiterer Ausführungsformen des Hochspannungskabels können die durch die im Wesentlichen senkrecht zur Längserstreckung des Hochspannungskabels stehende Oberfläche des Grundkörpers herausragenden Abschnitte der ersten Hochspannungsleitung und der zweiten Hochspannungsleitung eine dreieckige, eine bogenförmige, eine rechteckige oder eine stiftförmige Kontur ausbilden.

Gemäß einiger weiterer Ausführungsformen des Hochspannungskabels können die durch die im Wesentlichen senkrecht zur Längserstreckung des Hochspannungskabels stehende Oberfläche des Grundkörpers herausragenden Abschnitte der ersten Hochspannungsleitung und der zweiten Hochspannungsleitung eine Höhe in einem Bereich zwischen 0,1 mm und 20 mm, insbesondere zwischen 0,2 mm und 10 mm, über der Oberfläche des Grundkörpers aufweisen. Diese Aufbauhöhe ist besonders gut geeignet, um einen ausreichenden Kontakt nicht nur zu Körperteilen wie etwa Pfoten, sondern aufgrund der guten Durchdringung des Fells auch zu Haut eines zu vergrämenden Kleinsäugers herzustellen, so dass der vergrämende Hochspannungspuls sicher an den Kleinsäuger abgegeben werden kann und die effektive Abwehrfläche dadurch weiter erhöht wird..

Gemäß einiger weiterer Ausführungsformen des Hochspannungskabels können benachbarte durch die im Wesentlichen senkrecht zur Längserstreckung des Hochspannungskabels stehende Oberfläche des Grundkörpers herausragende Abschnitte der ersten Hochspannungsleitung und der zweiten Hochspannungsleitung entlang der Längserstreckung des Hochspannungskabels einen Abstand in einem Bereich zwischen 1 cm und 5 cm aufweisen. Dieser Abstand kann zum einen eine ausreichende Sicherheit gegenüber ungewollten Kurzschlüsse durch sich zufällig kontaktierende gegenpolig geladene Hochspannungsleitungen sicherstellen. Zum anderen ist durch den geringen Abstand eine möglichst gleichmäßige Abdeckung eines Motorraums in einem Kraftfahrzeug gewährleistet, so dass ein über das Hochspannungskabel laufender Kleinsäuger mit hoher Sicherheit auch einen vergrämenden Hochspannungspuls erhält.

Gemäß einiger weiterer Ausführungsformen des Hochspannungskabels können die erste Hochspannungsleitung und die zweite Hochspannungsleitung innerhalb des Grundkörpers parallel mit einem Abstand verlaufen, der in einem Bereich zwischen 2 mm und 2 cm, insbesondere in einem Bereich zwischen 4 mm und 10 mm, liegt. Dadurch bleibt das Kabel schmal und biegsam genug, um es auch in Kurven oder um Ecken herum im Motorraum verlegen zu können, ohne dass die Gefahr eines Kurzschlusses durch ein unabsichtliches Kontaktieren der zwei gegenpolig geladenen Hochspannungsleitungen besteht.

Gemäß einiger weiterer Ausführungsformen des Hochspannungskabels kann das elektrisch isolierende Material des Grundkörpers Polyurethan, Polyvinylchlorid, Silikon oder eine Kombination dieser Materialien aufweisen. Diese Kunststoffmaterialien bieten eine ausreichende elektrische Isolierung, eine gute Flexibilität sowie eine hinreichende Langlebigkeit gegenüber äußeren Witterungseinflüssen.

Gemäß einiger weiterer Ausführungsformen der Kleinsäugerabwehrvorrichtung kann die Kleinsäugerabwehrvorrichtung weiterhin eine Aktoreinheit aufweisen, welche dazu ausgelegt ist, einen (zusätzlichen) Abwehreffekt zur Vertreibung eines Kleinsäugers zu erzeugen.

Gemäß einiger weiterer Ausführungsformen der Kleinsäugerabwehrvorrichtung kann die Kleinsäugerabwehrvorrichtung weiterhin eine Überwachungseinrichtung, welche mit elektrischen Komponenten der Kleinsäugerabwehrvorrichtung gekoppelt ist, und welche dazu ausgelegt ist, den Betriebszustand der Kleinsäugerabwehrvorrichtung zu überwachen, und einem passiven oder semi-passiven RFID-Transponder aufweisen, welcher mit der Überwachungseinrichtung gekoppelt ist, und welcher dazu ausgelegt ist, ein den Betriebszustand der Kleinsäugerabwehrvorrichtung repräsentierendes Betriebszustandssignal über eine RFID-Luftschnittstelle an ein RFID-Lesegerät auszusenden. Gemäß alternativer Ausführungsformen der Kleinsäugerabwehrvorrichtung kann die Kleinsäugerabwehrvorrichtung auch über die visuelle oder maschinelle Ablesung von den Status der Kleinsäugerabwehrvorrichtung indizierenden LEDs überwacht werden.

Gemäß einiger weiterer Ausführungsformen der Kleinsäugerabwehrvorrichtung kann die Kleinsäugerabwehrvorrichtung weiterhin einen elektrischen Energiespeicher umfassen, welcher über den Hochspannungsgenerator mit dem Hochspannungskabel gekoppelt ist, und welcher dazu ausgelegt ist, die Hochspannungsleitungen des Hochspannungskabels zu deren Betrieb mit elektrischer Hochspannung zu beaufschlagen. Dadurch kann die Kleinsäugerabwehrvorrichtung in vorteilhafter Weise autark, d.h. ohne notwendigerweise mit einer externen Energiequelle wie beispielsweise der Fahrzeugbatterie des Kraftfahrzeugs verbunden zu sein, betrieben werden.

Gemäß einiger Ausführungsformen der Kleinsäugerabwehrvorrichtung kann der elektrische Energiespeicher mit der Aktoreinheit gekoppelt und dazu ausgelegt sein, die Aktoreinheit zu deren Betrieb mit elektrischer Energie zu versorgen. Gemäß einiger Ausführungsformen der Kleinsäugerabwehrvorrichtung kann der elektrische Energiespeicher eine Batterie oder einen Akkumulator aufweisen. Insbesondere kann der elektrische Energiespeicher wiederaufladbar sein.

Gemäß einiger weiterer Ausführungsformen der Kleinsäugerabwehrvorrichtung kann die Kleinsäugerabwehrvorrichtung eine Vielzahl von Hochspannungskabeln aufweisen, welche jeweils paarweise untereinander über gecrimpte, gelötete, geschweißte, geschraubte Verbindungen, Klemmverbindungen oder Kupplungsverbindungen derart verbunden sind, dass die jeweiligen ersten und zweiten Hochspannungsleitungen miteinander elektrisch verbunden sind. In manchen dieser Ausführungsformen kann die Vielzahl von Hochspannungskabeln ein Kabelnetzwerk in einer Sterntopologie oder einer Ringtopologie ausbildet. Die verschiedenen Topologietypen lassen sich dabei in vorteilhafter Weise an den verfügbaren Bauraum zur Installation der Kleinsäugerabwehrvorrichtung anpassen. Zudem kann die Anzahl der Abschnitte, an denen Kleinsäuger vergrämende Hochspannungspulse abgegeben werden, variabel an den jeweiligen Installationsort sowie die relevanten Eintrittsstellen für Kleinsäuger angepasst werden.

Gemäß einiger Ausführungsformen der Kleinsäugerabwehrvorrichtung kann die Überwachungseinrichtung mit dem elektrischen Energiespeicher gekoppelt und dazu ausgelegt sein, den Ladungszustand des elektrischen Energiespeichers zu überwachen. Dabei kann gemäß einiger Ausführungsformen der passive oder semi-passive RFID-Transponder dazu ausgelegt sein, ein den durch die Überwachungseinrichtung überwachten Ladungszustand des elektrischen Energiespeichers repräsentierendes Energiespeicherzustandssignal über die RFID-Luftschnittstelle an das RFID-Lesegerät auszusenden. Da bei autark operierenden Kleinsäugerabwehrvorrichtungen mit Akkumulatoren oder Batterien zwangsläufig im Laufe des Betriebs eine Wiederaufladung bzw. ein Batteriewechsel erforderlich ist, kann durch die kontinuierliche Überwachung des Ladungszustands des elektrischen Energiespeichers rechtzeitig und ohne hohen Wartungsaufwand die Notwendigkeit einer Wiederaufladung bzw. eines Batteriewechsels von außen über einen RFID-Auslesevorgang erkannt werden. Gemäß alternativer Ausführungsformen der Kleinsäugerabwehrvorrichtung kann die Überwachung des Ladungszustands des elektrischen Energiespeichers auch über die visuelle oder maschinelle Ablesung von den Ladungszustands des elektrischen Energiespeichers indizierenden LEDs überwacht werden.

Gemäß einiger weiterer Ausführungsformen der Kleinsäugerabwehrvorrichtung kann die Aktoreinheit einen Ultraschallgenerator aufweisen, welcher dazu ausgelegt ist, Schallsignale bei Frequenzen, die oberhalb des Hörbereiches des menschlichen Gehörs liegen, zu erzeugen. Es ist bekannt, dass Kleinsäuger auch Frequenzen im Ultraschallbereich von mehr als etwa 12 kHz wahrnehmen können. Ultraschallgeneratoren verjagen Kleinsäuger wie etwa Marder durch die Abgabe von schrillen Tonimpulsen hoher Frequenzen.

Gemäß einiger weiterer Ausführungsformen der Kleinsäugerabwehrvorrichtung kann die Aktoreinheit mindestens einen Lichtsignalgeber aufweisen, welcher dazu ausgelegt ist, in periodischen oder unregelmäßigen Abständen Lichtblitze abzustrahlen. Kleinsäuger werden beispielsweise durch grelle, intensive Lichtblitze und deren Reflexionen an metallischen Teilen im Motorraum irritiert. Gerade Marder als nachtaktive, lichtscheue Tiere fühlen sich unter dem Eindruck von Lichtblitzen nicht wohl und verlassen den Motorraum.

Jede der vorgenannten Typen von Aktoreinheiten wird mit elektrischem Strom betrieben, die die jeweiligen aktiven Komponenten der Aktoreinheiten aus dem elektrischen Energiespeicher beziehen können. Es kann selbstverständlich auch möglich sein, mehrere Aktoreinheiten unterschiedlichen Typs in eine Kleinsäugerabwehrvorrichtung zu integrieren, um beispielsweise die Wahrscheinlichkeit der Abwehr eines Kleinsäugers durch eine Kombination zu erhöhen. Zum Beispiel kann eine Kleinsäugerabwehrvorrichtung in manchen Ausführungsvarianten sowohl einen Hochspannungsgenerator als auch einen Ultraschallgenerator aufweisen. Gleichermaßen kann eine Kleinsäugerabwehrvorrichtung in manchen Ausführungsvarianten sowohl einen Hochspannungsgenerator als auch einen Lichtsignalgeber aufweisen. Es kann in manchen Ausführungsvarianten auch möglich sein, eine Kleinsäugerabwehrvorrichtung sowohl mit einem einen Ultraschallgenerator als auch mit einem Lichtsignalgeber auszustatten. In manchen Ausführungsvarianten kann eine Kleinsäugerabwehrvorrichtung sowohl einen Hochspannungsgenerator, als auch einen Ultraschallgenerator als auch einen Lichtsignalgeber aufweisen. Es sollte dabei klar sein, dass etliche andere Typen von Aktoreinheiten, die zur Vertreibung von Kleinsäugern geeignet sind, ebenfalls eingesetzt werden können.

Gemäß einiger Ausführungsformen der Kleinsäugerabwehrvorrichtung kann ein Gehäuse vorgesehen werden, in dem zumindest der elektrische Energiespeicher, die Überwachungseinrichtung und der RFID-Transponder eingebaut sind. Ebenso können einen Status von Elementen der Kleinsäugerabwehrvorrichtung indizierende LEDs in die Außenseite des Gehäuses eingebaut werden. Dadurch kann eine vorteilhafte Schirmung der Kleinsäugerabwehrvorrichtung gegenüber widrigen Einflüssen im Motorraum wie etwa Spritzwasser, Schmutzablagerungen geschützt werden. Zudem ist damit ein stabiler mechanischer Einbau in den Motorraum eines Kraftfahrzeugs gewährleistet.

Gemäß einiger Ausführungsformen der Kleinsäugerabwehrvorrichtung kann der passive oder semi-passive RFID-Transponder einen Speicherchip, einen integrierten Schaltkreis und eine RFID-Antenne aufweisen. Der Speicherchip kann dabei in manchen Ausführungsformen dazu ausgelegt sein, das jeweils aktuellste Energiespeicherzustandssignal zwischenzuspeichern. Dadurch kann der Speicherbedarf in dem RFID-Transponder gering gehalten und die notwendige Datenmenge beim Auslesen des RFID-Transponders schnell und effizient übermittelt werden. Besonders bei passiven oder semi-passiven RFID-Transponder ist dies vorteilhaft, damit die über das RFID-Abfragegerät zu übertragende Strahlungsleistung für die temporäre Energetisierung des RFID-Transponders nicht zu hoch sein muss.

Gemäß einiger Ausführungsformen der Kleinsäugerabwehrvorrichtung kann die Überwachungseinrichtung in einen Mikroprozessor der Kleinsäugerabwehrvorrichtung integriert und dazu ausgelegt sein, in periodischen Abständen den Ladungszustand des elektrischen Energiespeichers zu erfassen und das in dem Speicherchip des passiven oder semi-passiven RFID-Transponders gespeicherte Energiespeicherzustandssignal zu aktualisieren. Dabei kann die Überwachungseinrichtung vorteilhafterweise auf elektrische Parameter zurückgreifen, die für den Betrieb der Aktoreinheiten und/oder des Hochspannungsgenerators der Kleinsäugerabwehrvorrichtung ohnehin notwendig und dadurch im Prozessor vorhanden sind.

Gemäß einiger Ausführungsformen der Kleinsäugerabwehrvorrichtung kann die Überwachungseinrichtung in den passiven oder semi-passiven RFID-Transponder integriert und dazu ausgelegt sein, den Ladungszustand des elektrischen Energiespeichers zu erfassen, sobald der integrierte Schaltkreis des passiven oder semi-passiven RFID-Transponders durch das magnetische oder elektromagnetische Feld ein RFID-Lesegerätes energetisiert wird. Dies bietet den Vorteil, dass der Ladungszustand in Echtzeit ermittelt werden kann und nur dann eine Erfassung erfolgt, wenn auch tatsächlich eine Information über den Ladungszustand des elektrischen Energiespeichers angefordert wird, wodurch Energie des elektrischen Energiespeichers eingespart werden kann.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein schematisches Blockschaltbild einer Kleinsäugerabwehrvorrichtung gemäß einer Ausführungsform der Erfindung;
Fig. 2 eine perspektivische Darstellung einer Schnittansicht eines Hochspannungskabels für eine Kleinsäugerabwehrvorrichtung gemäß einer Ausführungsform der Erfindung;
Fig. 3 (A) bis (C) schematische Darstellungen von verschiedenen Formenvarianten für Hochspannungsleitungen in dem Hochspannungskabel der Fig. 2 gemäß verschiedener Ausführungsformen der Erfindung;
Fig. 4 (A) bis (C) Seitenansichten des Hochspannungskabels der Fig. 2 gemäß verschiedener Ausführungsformen der Erfindung; und
Fig. 5 ein abstrahiertes Flussdiagramm eines beispielhaften Verfahrens zum Betreiben einer in einem Kraftfahrzeug eingebauten Kleinsäugerabwehrvorrichtung gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### AUSFÜHRLICHE BESCHREIBUNG VON AUSFÜHRUNGSBEISPIELEN

RFID-Transponder im Sinne der vorliegenden Erfindung umfassen senderseitige Systemkomponenten, welche bei der berührungslosen und automatischen Datenübermittlung von senderseitigen Daten mit Hilfe von hochfrequenten oder ultrahochfrequenten Radiowellen eingesetzt werden. Die RFID-Transponder sind mobile Sendeschnittstellen, welche von elektronischen Komponenten von Objekten, an denen sie angebracht sind, objektbezogene Informationen erhalten und selbige über drahtlose Funkwellenübertragung an empfängerseitige Systemkomponenten übermitteln können. Dabei werden der jeweilige RFID-Transponder als Sender und ein Lesegerät als Empfänger über von dem Lesegerät erzeugte magnetische Wechselfelder geringer Reichweite oder hochfrequente Radiowellen gekoppelt, um Daten vom RFID-Transponder zum Lesegerät übertragen zu können. Ein passiver RFID-Transponder kann über diese elektromagnetische Kopplung auch temporär mit Energie versorgt werden, insbesondere mit Energie, die zur Auslösung und Aufrechterhaltung der Funkwellenübertragung notwendig ist.

RFID-Transponder im Sinne der vorliegenden Erfindung sind elektronische Module, die im Wesentlichen einen elektronischen Speicherchip und eine mit dem Speicherchip gekoppelte und in das Modul integrierte Antenne aufweisen. RFID-Transponder können in verschiedenen Frequenzbändern elektromagnetische Signale aussenden und empfangen, beispielsweise im Bereich 125 kHz ("low frequency", LF) und 5,8 GHz ("super-high frequency", SHF). Je nach gewünschtem Frequenzband wird die Bauform der integrierten Antenne gewählt. Von spezieller Bedeutung sind Frequenzbänder um 13,56 MHz ("high frequency", HF) und zwischen 860 MHz bis 960 MHz ("ultra-high frequency", UHF).

UHF-Frequenzbänder können beispielsweise immer dann verwendet werden, wenn auf den Kommunikationskanälen eine höhere Zugriffs- und Auslesereichweite erreicht werden soll als auf HF-Kanälen. Frequenz, Antennenform und Antennengröße können entsprechend gewählt werden, um eine gewünschte Zugriffs- und Auslesereichweite, Robustheit gegenüber Störungen und Umwelteinflüssen sowie Robustheit gegenüber Störungen von RFID-Transpondern untereinander zu gewährleisten. Über ein elektromagnetisches Feld zwischen einem Lesegerät und der integrierten Antenne des RFID-Transponders kann eine Luftschnittstelle etabliert werden, über die drahtlos und unter Nutzung vorgegebener Datenaustauschprotokolle Daten zwischen dem Speicherchip des RFID-Transponders und einem Prozessor des Lesegerätes ausgetauscht werden können.

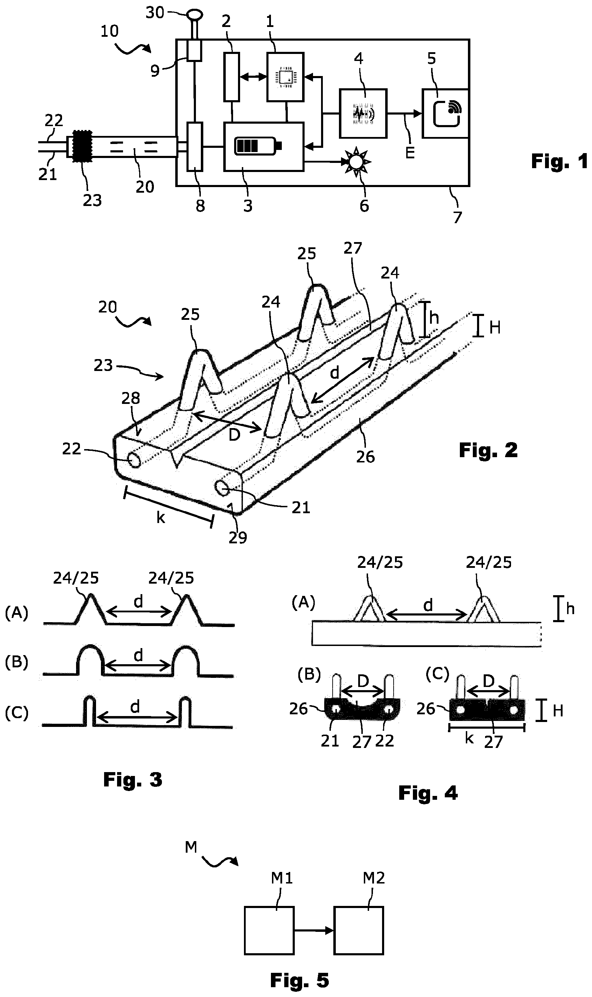

Fig. 1 zeigt ein schematisches Blockschaubild einer Kleinsäugerabwehrvorrichtung 10. Die Kleinsäugerabwehrvorrichtung 10 kann beispielsweise zum Verjagen bzw. Verscheuchen von Säugern, die eine relativ geringe Körpergröße haben, wie beispielsweise Igel, Spitzmäuse, Nager, Fledermäuse und Hasentiere, eingesetzt werden. Kleinsäuger können dabei insbesondere Marder, marderartige Nager und Ratten umfassen. Die Kleinsäugerabwehrvorrichtung 10 kann beispielsweise im Motorraum eines Kraftfahrzeugs verbaut werden, um beispielsweise Marder oder Ratten von einem Eindringen in den Motorraum abzuhalten.

Die Kleinsäugerabwehrvorrichtung 10 ist mit einem mindestens einem Hochspannungskabel 20 ausgestattet, welches an ein Gehäuse 7 der Kleinsäugerabwehrvorrichtung 10 angeschlossen werden kann. Das Hochspannungskabel 20 wird mit Bezug auf Fig. 2, 3 und 4 genauer gezeigt und erläutert.

Fig. 2 zeigt eine perspektivische Darstellung einer Schnittansicht eines Hochspannungskabels 20 für eine Kleinsäugerabwehrvorrichtung. Fig. 3 (A) bis (C) zeigen schematische Darstellungen von verschiedenen Formenvarianten für Hochspannungspulse abgebende Abschnitte der Hochspannungsleitungen in dem Hochspannungskabel der Fig. 2. Fig. 4 (A) bis (C) zeigen Seitenansichten des Hochspannungskabels 20 der Fig. 2.

Das Hochspannungskabel 20 weist einen aus einem elektrisch isolierenden Material gefertigten Grundkörper 26 auf. Das elektrisch isolierende Material des Grundkörpers 26 kann beispielsweise Polyurethan (PU), Polyvinylchlorid (PVC), Silikon oder eine Kombination dieser Materialien sein. Der Grundkörper 26 weist im Beispiel der Fig. 2 einen im Wesentlichen rechteckigen Querschnitt mit einer Höhe H und einer Breite k auf. Die Höhe H kann beispielsweise wenige Millimeter bis wenige Zentimeter betragen, während die Breite k beispielsweise einen Wert zwischen einem Zentimeter und zehn Zentimeter annehmen kann. Entlang einer Längserstreckung des Grundkörpers (in der Fig. 2 in die Zeichenebene hinein dargestellt) kann der rechteckige Querschnitt im Wesentlichen gleich bleiben. Die Länge des Hochspannungskabel 20 kann in einem Bereich zwischen wenigen Zentimetern bis zu mehreren Metern liegen und kann dem gewünschten Einsatzbereich angepasst werden.

In dem Grundkörper sind zwei elektrisch leitfähige Hochspannungsleitungen 21 und 22 ausgebildet, welche beide im Wesentlichen entlang einer Längserstreckung des Hochspannungskabels 20 zumindest abschnittsweise vollständig innerhalb des Grundkörpers 26 verlaufen, d.h. dass der Grundkörper 26 die elektrisch leitfähige Hochspannungsleitungen 21 und 22 in diesen Abschnitten vollständig umfasst und gegenüber der Umgebung und voneinander elektrisch isoliert. Die elektrisch leitfähige Hochspannungsleitungen 21 und 22 können beispielsweise aus Edelstahldraht oder Golddraht gefertigt sein. Die Hochspannungsleitungen 21 und 22 verlaufen innerhalb des Grundkörpers 26 parallel zueinander und können einen Abstand D voneinander aufweisen, der in einem Bereich zwischen 2 mm und 2 cm, insbesondere in einem Bereich zwischen 4 mm und 10 mm, liegt.

Die elektrisch leitfähigen Hochspannungsleitungen 21 und 22 ragen entlang der Längserstreckung des Hochspannungskabels 20 an einer Vielzahl von Stellen 23 durch eine im Wesentlichen senkrecht zur Längserstreckung des Hochspannungskabels 20 stehende Oberfläche 28 des Grundkörpers 26 heraus. Mit anderen Worten durchbrechen die Drähte der elektrisch leitfähigen Hochspannungsleitungen 21 und 22 die Oberfläche 28 des Grundkörpers 26 an vordefinierten Stellen, verlaufen eine bestimmte Länge oberhalb der Oberfläche 28 des Grundkörpers 26 und werden nach dieser Länge vom Grundkörper 26 wieder vollständig umschlossen. Dadurch bilden die Hochspannungsleitungen 21 und 22 an den vordefinierten Stellen gemeinsam mit der darunter liegenden Oberfläche 28 Schlaufen einer vorgegebenen Kontur 24 bzw. 25. Beispielsweise können die durch die Oberfläche 28 des Grundkörpers 26 herausragenden Abschnitte 23 der Hochspannungsleitungen 21 bzw. 22 jeweils eine dreieckige Kontur 24 bzw. 25 (Fig. 2, 3(A) und 4(A)), eine bogenförmige Kontur 24 bzw. 25 (Fig. 3 (B)), eine rechteckige Kontur 24 bzw. 25 oder eine stiftförmige Kontur 24 bzw. 25 (Fig. 3 (C), Fig. 4(B) und Fig. 4(C)) ausbilden. Selbstverständlich sind auch andere Konturen denkbar und es ist ebenfalls möglich, dass unterschiedliche Abschnitte 23 unterschiedliche Konturen ausbilden. Die herausragenden Abschnitte 23 der Hochspannungsleitungen 21 bzw. 22 können zum Beispiel eine Höhe h in einem Bereich zwischen 0,1 mm und 20 mm, insbesondere zwischen 0,2 mm und 10 mm, über der Oberfläche 28 des Grundkörpers 26 aufweisen. Des Weiteren können benachbarte der Abschnitte 23 entlang der Längserstreckung des Hochspannungskabels 20 einen Abstand d in einem Bereich zwischen 1 cm und 5 cm aufweisen.

Die Anzahl der Hochspannungsleitungen 21 bzw. 22 ist dabei nur beispielhaft in Fig. 2 mit zwei dargestellt. Beispielsweise kann das Hochspannungskabel 20 auch mehr als zwei Hochspannungsleitungen 21 bzw. 22 aufweisen, zum Beispiel vier Hochspannungsleitungen 21 bzw. 22, sechs Hochspannungsleitungen 21 bzw. 22 oder acht Hochspannungsleitungen 21 bzw. 22.

Das Hochspannungskabel 20 kann weiterhin einen Ablaufkanal 27 aufweisen, welcher als Vertiefung in die Oberfläche 28 des Grundkörpers 26 eingebracht ist. Der Ablaufkanal 27 kann dabei in der Mitte des Grundkörpers 26, beispielsweise in der Mitte zwischen den Hochspannungsleitungen 21 und 22 entlang der Längserstreckung des Hochspannungskabels 20, eingebracht werden. Der Ablaufkanal 27 dient dazu, sich auf der Oberfläche 28 des Grundkörpers 26 sammelnde Nässe von der Oberfläche 28 des Grundkörpers 26 abzuführen, um beispielsweise einen Kurzschluss zwischen den unterschiedlichen geladenen Hochspannungsleitungen 21 bzw. 22 zu vermeiden. Die Querschnittsform des Ablaufkanals 27 kann unterschiedlich ausgebildet sein, beispielsweise als weiter Trog (Fig. 4(B)) oder als im Wesentlichen dreieckige Einkerbung (Fig. 4(C)).

Die Kleinsäugerabwehrvorrichtung 10 weist einen Hochspannungsgenerator 8 auf, welcher dazu ausgelegt ist, welcher zwischen dem elektrischen Energiespeicher 3 und das Hochspannungskabel 20 gekoppelt und dazu ausgelegt ist, mindestens eine der Hochspannungsleitungen des Hochspannungskabels 20 mit einem Hochspannungspotential zu beaufschlagen. Beispielsweise kann der Hochspannungsgenerator im Falle von mindestens zwei Hochspannungsleitungen eine Hochspannung zwischen den mindestens zwei Hochspannungsleitungen des Hochspannungskabels 20 anlegen.

Die Kleinsäugerabwehrvorrichtung 10 kann weiterhin einen elektrischen Energiespeicher 3 aufweisen. Der elektrische Energiespeicher 3 kann beispielsweise eine Batterie oder ein wiederaufladbarer Akkumulator sein, der mit der Aktoreinheit 2 und der Überwachungseinrichtung 4 elektrisch gekoppelt ist.

Erneut Bezug nehmend auf Fig. 1, kann die Kleinsäugerabwehrvorrichtung 10 zusätzlich eine Aktoreinheit 2, eine Überwachungseinrichtung 4 und/oder einen RFID-Transponder 5 aufweisen. Einige oder alle der Komponenten können vollständig oder zumindest in Teilen in e3m Gehäuse 7 integriert bzw. eingebaut sein. Es kann dabei vorgesehen sein, dass einige Teile oder Teilbereiche von bestimmten Komponenten aus dem Gehäuse 7 herausragen oder einen Wandabschnitt des Gehäuses 7 bilden. Beispielsweise können Teile der Aktoreinheit 2 wie etwa Lautsprecher oder Leuchtmittel aus dem Gehäuse 7 heraustreten oder in die Wand des Gehäuses 7 integriert sein.

Neben der Versorgung des Hochspannungsgenerators 8 kann der elektrische Energiespeicher 3 zusätzlich eine Versorgung mit elektrischer Energie für die Aktoreinheit 2 und die Überwachungseinrichtung 4 bereitstellen. Der RFID-Transponder 5 ist insbesondere ein passiver oder semi-passiver Transponder, welcher durch ein magnetisches oder elektromagnetisches Strahlungsfeld eines RFID-Lesegerätes 20 energetisiert wird. Daher muss der RFID-Transponder 5 nicht mit dem elektrischen Energiespeicher 3 gekoppelt sein und bezieht auch keine elektrische Energie aus selbigem. Im Falle eines semi-passiven RFID-Transponders 5 kann der RFID-Transponder 5 eine zusätzliche (nicht explizit dargestellte) kleinere Batterie aufweisen, die lediglich Komponenten des RFID-Transponders 5 zusätzlich zu der Energetisierung aus dem magnetischen oder elektromagnetischen Strahlungsfeld eines RFID-Lesegerätes 20 mit elektrischer Energie versorgt. Durch diese zusätzliche kleinere Batterie kann die RFID-Übertragungsreichweite des RFID-Transponders 5 gegenüber einem rein passiven RFID-Transponder 5 erhöht werden.

Ferner können (nicht explizit dargestellte) weitere elektrische Komponenten wie etwa Spannungswandler, Ein-/Ausschalter oder Sicherungen zwischen den elektrischen Energiespeicher 3 und die jeweils mit Energie versorgten Komponenten 3 und 4 geschaltet sein, je nach Spannungs- und Strombedarf der Komponenten. Beispielsweise kann in eine Wand des Gehäuses 7 eine optische Anzeigevorrichtung 6, wie etwa eine farbige LED, eingelassen sein, die mit dem elektrischen Energiespeicher 3 gekoppelt ist und über die nach außen hin Informationen über den Ladungszustand des elektrischen Energiespeichers 3 angezeigt werden können. Zum Beispiel kann die LED 6 bei Unterschreitung eines bestimmten Ladungsniveaus des elektrischen Energiespeichers 3 periodisch blinken.

In anderen Varianten kann es möglich sein, dass die Kleinsäugerabwehrvorrichtung 10 von extern mit elektrischer Energie versorgt wird. Dazu kann die Kleinsäugerabwehrvorrichtung 10 eine geeignete Energieversorgungsschnittstelle 9 aufweisen, über die per induktiver Energieübertragung oder über kabelgebundene Stromeinspeisung die elektrischen Komponenten der Kleinsäugerabwehrvorrichtung 10 mit Strom zu deren Betrieb versorgt werden können.

Die Aktoreinheit 2 ist generell dazu ausgelegt, einen Abwehreffekt zur Vertreibung eines Kleinsäugers zu erzeugen. Dieser Abwehreffekt kann auf verschiedenen Wirkprinzipien basieren wie etwa Abgabe von akustischen Signalen und/oder Abgabe von visuellen Signalen. Alternativ oder zusätzlich dazu kann die Aktoreinheit 2 einen Ultraschallgenerator aufweisen, welcher dazu ausgelegt ist, Schallsignale bei Frequenzen, die oberhalb des Hörbereiches des menschlichen Gehörs liegen, zu erzeugen. Diese Schallsignale sollen zur Abschreckung und Vergrämung der Kleinsäuger dienen.

Schließlich kann die Aktoreinheit 2 alternativ oder zusätzlich dazu mindestens einen Lichtsignalgeber aufweisen, welcher dazu ausgelegt ist, in periodischen oder unregelmäßigen Abständen Lichtblitze abzustrahlen. Diese Lichtblitze können insbesondere in dunklen Umgebungen, d.h. innerhalb eines geschlossenen Motorraums und/oder bei Nacht, dazu geeignet sein, Kleinsäuger wie Marder zu irritieren, zu blenden und letztlich zu verjagen.

Die Kleinsäugerabwehrvorrichtung 10 kann in manchen Varianten dazu ausgelegt sein, autark betrieben zu werden, das heißt, zur Aufrechterhaltung eines geeigneten Abwehrbetriebs der Aktoreinheit 2 und des Hochspannungskabels 20 ist kein Zutun von außen notwendig, sobald die Vorrichtung einmal aktiviert worden ist und ausreichend elektrische Energie in dem elektrischen Energiespeicher 3 vorhanden ist. In anderen Varianten kann die Kleinsäugerabwehrvorrichtung 10 mit elektrischer Energie von extern versorgt werden.

Zur Gewährleistung der Aufrechterhaltung des Abwehrbetriebs und zur Überwachung der Funktionstüchtigkeit der Kleinsäugerabwehrvorrichtung 10 ist die Überwachungseinrichtung 4 dazu ausgelegt, elektrische Betriebsparameter elektrischer Komponenten der Kleinsäugerabwehrvorrichtung 10 zu überwachen. Solche elektrischen Betriebsparameter können beispielsweise der Stromfluss durch die Aktoreinheit 2 und/oder das bzw. die Hochspannungskabel 20 oder der Spannungspegel und/oder der Spannungspegelverlauf in bestimmten Betriebsmodi der Kleinsäugerabwehrvorrichtung 10 sein. Insbesondere kann es für die Überwachungseinrichtung 4 möglich sein, als einen der elektrischen Betriebsparameter den Ladungszustand des elektrischen Energiespeichers 3 zu überwachen.

Dazu kann die Überwachungseinrichtung 4 geeignete elektrische Schaltungen aufweisen, wie beispielsweise ein Spannungsmessgerät mit Messelektronik, Vorwiderstand und/oder Spannungsteiler. Weiterhin kann die Überwachungseinrichtung 4 geeignete Schaltlogikbausteine aufweisen, die in der Lage sind, die gemessenen elektrischen Parameter auszuwerten und in ein Messsignal umzusetzen. Dabei kann die Überwachungseinrichtung 4 beispielsweise einen Mikroprozessor, einen FPGA, einen ASIC oder andere geeignete digitale oder analoge Schaltkreise aufweisen.

Die Überwachungseinrichtung 4 kann Messsignale, Betriebszustandssignale und/oder entsprechend aufbereitete Ladungszustandssignale an den RFID-Transponder 5 weiterleiten. Der RFID-Transponder 5 kann beispielsweise neben einer RFID-Antenne und einem integrierten Schaltkreis einen Speicherchip aufweisen, in dem die jeweiligen Messsignale, Betriebszustandssignale und/oder aufbereitete Ladungszustandssignale der Überwachungseinrichtung 4 als Statussignale gespeichert werden können. Je nach Speichergröße kann es möglich sein, nur den jeweils aktuellen Wert oder auch mehrere Werte der erfassten und gegebenenfalls aufbereiteten Statussignale in zeitlicher Abfolge auf dem Speicherchip des RFID-Transponders 5 zu speichern. Bei einem Auslesen des passiven oder semi-passiven RFID-Transponders 5 kann einer oder mehrere der in dem Speicherchip momentan abgelegten Werte der Statussignale ausgelesen und als ein den durch die Überwachungseinrichtung 4 überwachten Betriebszustand der Kleinsäugerabwehrvorrichtung 10 repräsentierendes Betriebszustandssignal über eine Luftschnittstelle mittels eines gemäß RFID vorgesehenen Datenaustauschprotokoll an ein RFID-Abfragegerät eines RFID-Lesegerätes ausgesendet werden. Insbesondere kann es möglich sein, ein den erfassten Ladungszustand des elektrischen Energiespeichers 3 repräsentierendes Energiespeicherzustandssignal E über die Luftschnittstelle an das RFID-Abfragegerät des RFID-Lesegerätes auszusenden.

Das Übermitteln von Statussignalen der Komponenten der Kleinsäugerabwehrvorrichtung 10 über RFID bietet den Vorteil, dass für einen Auslesevorgang kein direkter Zugang bzw. keine direkte Sicht auf die Kleinsäugerabwehrvorrichtung 10 notwendig ist. Deshalb kann bei einer Montage der Kleinsäugerabwehrvorrichtung 10 beispielsweise im Motorraum eines Kraftfahrzeugs eine Überwachung des Betriebszustandes der Kleinsäugerabwehrvorrichtung 10 erfolgen, ohne dass die Motorhaube geöffnet werden muss.

Wie in Fig. 1 dargestellt, kann der RFID-Transponder 5 als separates Modul in der Kleinsäugerabwehrvorrichtung 10 integriert werden. Beispielsweise kann ein passiver RFID-Transponder 5 ein aufklebbares Etikett sein, welches in das Gehäuse 7, insbesondere zum Beispiel in ein Batteriefach des elektrischen Energiespeichers 3 eingeklebt werden kann. Durch eine Integration des RFID-Transponders 5 in das Gehäuse 7 ist der RFID-Transponder 5 gegenüber Umwelteinflüssen wie etwa Feuchtigkeit, Schmutz oder anderen potentiell die Funktionsfähigkeit beeinträchtigenden Einflüssen geschützt. Alternativ dazu kann der RFID-Transponder 5 zusammen mit der Überwachungseinrichtung 4 in ein gemeinsames Transpondermodul integriert werden. Dabei kann die Überwachungseinrichtung 4 ebenfalls im Zuge der externen Energetisierung des RFID-Transponders 5 aktiviert werden. Immer dann, wenn ein RFID-Abfragegerät eines RFID-Lesegerätes den Speicherchip des RFID-Transponders 5 auslesen möchte, kann die Überwachungseinrichtung 4 Statussignale - insbesondere den Ladungszustand des elektrischen Energiespeichers 3 - in Echtzeit und bedarfsgerecht erfassen, so dass der RFID-Transponder 5 dem RFID-Abfragegerät eines RFID-Lesegerätes stets den aktuellsten Betriebszustand übermitteln kann.

Es kann auch möglich sein, die Überwachungseinrichtung 4 gemeinsam mit einem Prozessor 1 der Kleinsäugerabwehrvorrichtung 10 in einem elektronischen Schaltbaustein nebeneinander zu implementieren. Die Überwachungseinrichtung 4 kann dann an eine Datenschnittstelle des Prozessors 1 angeschlossen sein, und die Erfassung des Betriebszustands über durch den Prozessor 1 erfasste elektrische Parameter des elektrischen Energiespeichers 3 und/oder anderer elektrisch betriebener Komponenten wie etwa der Aktoreinheit 2 und/oder des bzw. der Hochspannungskabel(s) 20 vornehmen. Beispielsweise kann der Prozessor 1 Fehler oder Defekte im elektrischen Energiespeicher 3 oder in anderen elektrisch betriebenen Komponenten erkennen, wie beispielsweise einen zu hohen Spannungsabfall, eine zu schnelle Entladung oder einen Kurzschluss. Entsprechend kann die Überwachungseinrichtung 4 hin auch derartige außergewöhnliche Betriebszustände über den RFID-Transponder 5 an ein RFID-Abfragegerät eines RFID-Lesegerätes kommunizieren.

Das RFID-Lesegerät kann beispielsweise ein Smartphone, ein Tablet, ein Laptop, ein Notebook oder eine Smartwatch. Dazu kann das RFID-Lesegerät einen eigenen elektrischen Energiespeicher aufweisen, welcher das RFID-Abfragegerät sowie weitere elektronische Komponenten wie etwa einen Lesegerätprozessor, Eingabe-/Ausgabeschnittstellen oder Displays mit elektrischer Energie zu versorgen. Die über das RFID-Abfragegerät von einem RFID-Transponder 5 abgerufenen Betriebszustandssignale und/oder Energiespeicherzustandssignale E können an die weiteren elektronischen Komponenten 1 für eine Bewertung durch einen Nutzer sowie gegebenenfalls für eine Weitergabe an dritte externe Geräte, wie etwa über eine Funkverbindung, weitergegeben werden. Beispielsweise kann es eine anwendungsspezifische Softwareapplikation ("App") für ein konventionelles Smartphone einem Nutzer ermöglichen, eine Kleinsäugerabwehrvorrichtung 10 über sein persönliches, als RFID-Lesegerät fungierendes mobiles Endgerät hinsichtlich eines möglicherweise erforderlichen Batteriewechsels zu überwachen.

Fig. 5 zeigt ein abstrahiertes Flussdiagramm eines Verfahrens M zum Betreiben einer in einem Kraftfahrzeug eingebauten Kleinsäugerabwehrvorrichtung mit Hochspannungskabeln zur Abgabe von Kleinsäuger vergrämenden Hochspannungspulsen, beispielsweise der Kleinsäugerabwehrvorrichtung 10 der Fig. 1. Das Verfahren M kann insbesondere im Zusammenhang mit als Hochspannungsaktoreinheiten wirkenden Hochspannungskabeln, wie beispielsweise dem im Zusammenhang mit Fig. 2, 3 und 4 erläuterten Hochspannungskabel 20, eingesetzt werden.

In einem ersten Schritt M1 wird ein einen Hochspannungsgenerator 8 aufweisendes Gehäuse 7 einer Kleinsäugerabwehrvorrichtung 10 mit mindestens einem Hochspannungskabel 20 verbunden. Das Hochspannungskabel 20 weist einen aus einem elektrisch isolierenden Material gefertigten Grundkörper 26, eine erste elektrisch leitfähige Hochspannungsleitung 21, welche im Wesentlichen entlang einer Längserstreckung des Hochspannungskabels 20 zumindest abschnittsweise vollständig innerhalb des Grundkörpers 26 verläuft, und eine zweite elektrisch leitfähige Hochspannungsleitung 22 auf, welche im Wesentlichen parallel zu der ersten Hochspannungsleitung 21 in einem Leitungsabstand D zumindest abschnittsweise vollständig innerhalb des Grundkörpers 26 verläuft. Dabei ragen die Hochspannungsleitungen 21, 22 entlang der Längserstreckung des Hochspannungskabels 20 an einer Vielzahl von Stellen 23 durch eine im Wesentlichen senkrecht zur Längserstreckung des Hochspannungskabels 20 stehende Oberfläche 28 des Grundkörpers 26 heraus. In einem zweiten Schritt M2 wird dann mindestens eine der ersten und zweiten Hochspannungsleitungen 21, 22 mit einer Hochspannung durch den Hochspannungsgenerator 8 beaufschlagt.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Hochspannungskabel (20), umfassend:
einen aus einem elektrisch isolierenden Material gefertigten Grundkörper (26);
eine erste elektrisch leitfähige Hochspannungsleitung (21), welche im Wesentlichen entlang einer Längserstreckung des Hochspannungskabels (20) zumindest abschnittsweise vollständig innerhalb des Grundkörpers (26) verläuft; und
eine zweite elektrisch leitfähige Hochspannungsleitung (22), welche im Wesentlichen parallel zu der ersten Hochspannungsleitung (21) in einem Leitungsabstand (D) zumindest abschnittsweise vollständig innerhalb des Grundkörpers (26) verläuft,
wobei die erste Hochspannungsleitung (21) und die zweite Hochspannungsleitung (22) entlang der Längserstreckung des Hochspannungskabels (20) an einer Vielzahl von Stellen (23) durch eine im Wesentlichen senkrecht zur Längserstreckung des Hochspannungskabels (20) stehende Oberfläche (28) des Grundkörpers (26) herausragen.

2. Hochspannungskabel (20) gemäß Anspruch 1, wobei die erste Hochspannungsleitung (21) und die zweite Hochspannungsleitung (22) aus Edelstahldraht oder Golddraht gefertigt sind.

3. Hochspannungskabel (20) gemäß einem der Ansprüche 1 und 2, wobei die durch die im Wesentlichen senkrecht zur Längserstreckung des Hochspannungskabels (20) stehende Oberfläche (28) des Grundkörpers (26) herausragenden Abschnitte der ersten Hochspannungsleitung (21) und der zweiten Hochspannungsleitung (22) eine dreieckige, eine bogenförmige, eine rechteckige oder eine stiftförmige Kontur ausbilden.

4. Hochspannungskabel (20) gemäß Anspruch 3, wobei die durch die im Wesentlichen senkrecht zur Längserstreckung des Hochspannungskabels (20) stehende Oberfläche (28) des Grundkörpers (26) herausragenden Abschnitte der ersten Hochspannungsleitung (21) und der zweiten Hochspannungsleitung (22) eine Höhe in einem Bereich zwischen 0,1 mm und 20 mm, insbesondere zwischen 0,2 mm und 10 mm, über der Oberfläche (28) des Grundkörpers (26) aufweisen.

5. Hochspannungskabel (20) gemäß einem der Ansprüche 1 bis 4, wobei benachbarte durch die im Wesentlichen senkrecht zur Längserstreckung des Hochspannungskabels (20) stehende Oberfläche (28) des Grundkörpers (26) herausragende Abschnitte der ersten Hochspannungsleitung (21) und der zweiten Hochspannungsleitung (22) entlang der Längserstreckung des Hochspannungskabels (20) einen Abstand (d) in einem Bereich zwischen 1 cm und 5 cm aufweisen.

6. Hochspannungskabel (20) gemäß einem der Ansprüche 1 bis 5, wobei die erste Hochspannungsleitung (21) und die zweite Hochspannungsleitung (22) innerhalb des Grundkörpers (26) parallel mit einem Abstand verlaufen, der in einem Bereich zwischen 2 mm und 2 cm, insbesondere in einem Bereich zwischen 4 mm und 10 mm, liegt.

7. Hochspannungskabel (20) gemäß einem der Ansprüche 1 bis 6, wobei das elektrisch isolierende Material des Grundkörpers (26) Polyurethan, Polyvinylchlorid, Silikon oder eine Kombination dieser Materialien aufweist.

8. Kleinsäugerabwehrvorrichtung (10), umfassend:
mindestens ein Hochspannungskabel (20) gemäß einem der Ansprüche 1 bis 7; und
einen Hochspannungsgenerator (8), welcher dazu ausgelegt ist, mindestens eine der Hochspannungsleitungen (21, 22) des Hochspannungskabels (20) zu deren Betrieb mit elektrischer Hochspannung zu beaufschlagen.

9. Kleinsäugerabwehrvorrichtung (10) gemäß Anspruch 8, weiterhin umfassend:
eine Aktoreinheit (2), welche dazu ausgelegt ist, einen Abwehreffekt zur Vertreibung eines Kleinsäugers zu erzeugen.

10. Kleinsäugerabwehrvorrichtung (10) gemäß Anspruch 8 oder 9, weiterhin umfassend:
einer Überwachungseinrichtung (4), welche mit elektrischen Komponenten der Kleinsäugerabwehrvorrichtung (10) gekoppelt ist, und welche dazu ausgelegt ist, den Betriebszustand der Kleinsäugerabwehrvorrichtung (10) zu überwachen; und
einem passiven oder semi-passiven RFID-Transponder (5), welcher mit der Überwachungseinrichtung (4) gekoppelt ist, und welcher dazu ausgelegt ist, ein den Betriebszustand der Kleinsäugerabwehrvorrichtung (10) repräsentierendes Betriebszustandssignal über eine RFID-Luftschnittstelle an ein RFID-Lesegerät auszusenden.

11. Kleinsäugerabwehrvorrichtung (10) gemäß einem der Ansprüche 8 bis 10, weiterhin mit:
einem elektrischen Energiespeicher (3), welcher über den Hochspannungsgenerator (8) mit dem Hochspannungskabel (20) gekoppelt ist, und welcher dazu ausgelegt ist, die Hochspannungsleitungen (21, 22) des Hochspannungskabels (20) zu deren Betrieb mit elektrischer Hochspannung zu beaufschlagen.

12. Kleinsäugerabwehrvorrichtung (10) gemäß Anspruch 11, wobei der elektrische Energiespeicher (3) eine Batterie oder einen Akkumulator aufweist.

13. Kleinsäugerabwehrvorrichtung (10) gemäß einem der Ansprüche 8 bis 12, welche eine Vielzahl von Hochspannungskabeln (20) aufweist, welche jeweils paarweise untereinander über gecrimpte, gelötete, geschweißte, geschraubte Verbindungen, Klemmverbindungen oder Kupplungsverbindungen derart verbunden sind, dass die jeweiligen ersten und zweiten Hochspannungsleitungen (21, 22) miteinander elektrisch verbunden sind.

14. Kleinsäugerabwehrvorrichtung (10) gemäß Anspruch 13, wobei die Vielzahl von Hochspannungskabeln (20) ein Kabelnetzwerk in einer Sterntopologie oder einer Ringtopologie ausbildet.

15. Kraftfahrzeug mit einer Kleinsäugerabwehrvorrichtung (10) gemäß einem der Ansprüche 8 bis 14, welche im Motorraum des Kraftfahrzeugs angeordnet ist.

16. Verfahren (M) zum Betreiben einer in einem Kraftfahrzeug eingebauten Kleinsäugerabwehrvorrichtung (10), umfassend:
Verbinden (M1) eines einen Hochspannungsgenerator (8) aufweisenden Gehäuses (7) einer Kleinsäugerabwehrvorrichtung (10) mit mindestens einem Hochspannungskabel (20), welches einen aus einem elektrisch isolierenden Material gefertigten Grundkörper (26), eine erste elektrisch leitfähige Hochspannungsleitung (21), welche im Wesentlichen entlang einer Längserstreckung des Hochspannungskabels (20) zumindest abschnittsweise vollständig innerhalb des Grundkörpers (26) verläuft, und eine zweite elektrisch leitfähige Hochspannungsleitung (22) aufweist, welche im Wesentlichen parallel zu der ersten Hochspannungsleitung (21) in einem Leitungsabstand (D) zumindest abschnittsweise vollständig innerhalb des Grundkörpers (26) verläuft, wobei die Hochspannungsleitungen (21, 22) entlang der Längserstreckung des Hochspannungskabels (20) an einer Vielzahl von Stellen (23) durch eine im Wesentlichen senkrecht zur Längserstreckung des Hochspannungskabels (20) stehende Oberfläche (28) des Grundkörpers (26) herausragen; und
Beaufschlagen (M2) mindestens einer der ersten und zweiten Hochspannungsleitungen (21, 22) mit einer Hochspannung durch den Hochspannungsgenerator (8).

## Claims

1. High-voltage cable (20), comprising :
a base body (26) made from an electrically insulating material;
a first electrically conductive high-voltage line (21), which runs substantially along a longitudinal extension of the high-voltage cable (20) at least in sections completely within the base body (26); and
a second electrically conductive high-voltage line (22), which runs substantially parallel to the first high-voltage line (21) at a line spacing (D) at least in sections completely within the base body (26),
wherein the first high-voltage line (21) and the second high-voltage line (22) protrude along the longitudinal extension of the high-voltage cable (20) at a plurality of points (23) through a surface (28) of the base body (26) oriented substantially perpendicular to the longitudinal extension of the high-voltage cable (20).

2. High-voltage cable (20) according to claim 1, wherein the first high-voltage line (21) and the second high-voltage line (22) are made of stainless steel wire or gold wire.

3. High-voltage cable (20) according to either one of claims 1 or 2, wherein the sections of the first high-voltage line (21) and second high-voltage line (22) protruding through the surface (28) of the base body (26) oriented substantially perpendicular to the longitudinal extension of the high-voltage cable (20) form a triangular, arcuate, rectangular or pin-shaped contour.

4. High-voltage cable (20) according to claim 3, wherein the sections of the first high-voltage line (21) and second high-voltage line (22) protruding through the surface (28) of the base body (26) oriented substantially perpendicular to the longitudinal extension of the high-voltage cable (20) have a height in a range of between 0.1 mm and 20 mm, in particular between 0.2 mm and 10 mm, above the surface (28) of the base body (26).

5. High-voltage cable (20) according to one of claims 1 to 4, wherein adjacent sections of the first high-voltage line (21) and second high-voltage line (22) protruding through the surface (28) of the base body (26) oriented substantially perpendicular to the longitudinal extension of the high-voltage cable (20) have a spacing (d) along the longitudinal extension of the high-voltage cable (20) in a range of between 1 cm and 5 cm.

6. High-voltage cable (20) according to one of claims 1 to 5, wherein the first high-voltage line (21) and the second high-voltage line (22) run parallel within the base body (26) with a spacing, which is in a range of between 2 mm and 2 cm, in particular in a range of between 4 mm and 10 mm.

7. High-voltage cable (20) according to one of claims 1 to 6, wherein the electrically insulating material of the base body (26) has polyurethane, polyvinyl chloride, silicone or a combination of these materials.

8. Small mammal deterrent device (10), comprising:
at least one high-voltage cable (20) according to one of claims 1 to 7; and
a high-voltage generator (8), which is designed to supply at least one of the high-voltage lines (21, 22) of the high-voltage cable (20) with high-voltage electricity for its operation.

9. Small mammal deterrent device (10) according to claim 8, further comprising:
an actuator unit (2), which is designed to produce a deterrent effect to drive away a small mammal.

10. Small mammal deterrent device (10) according to claim 8 or 9, further comprising:
a monitoring device (4), which is coupled to electrical components of the small mammal deterrent device (10), and which is designed to monitor the operating state of the small mammal deterrent device (10); and
a passive or semi-passive RFID transponder (5), which is coupled to the monitoring device (4), and which is designed to transmit an operating state signal representing the operating state of the small mammal deterrent device (10) to an RFID reader via an RFID air interface.

11. Small mammal deterrent device (10) according to one of claims 8 to 10, further having:
an electrical energy storage device (3), which is coupled to the high-voltage cable (20) via the high-voltage generator (8), and which is designed to supply the high-voltage lines (21, 22) of the high-voltage cable (20) with high-voltage electricity for their operation.

12. Small mammal deterrent device (10) according to claim 11, wherein the electrical energy storage device (3) has a battery or an accumulator.

13. Small mammal deterrent device (10) according to one of claims 8 to 12, which has a plurality of high-voltage cables (20), which are respectively connected to one another in pairs via crimped, soldered, welded, screwed connections, clamping connections or coupling connections in such a way that the respective first and second high-voltage lines (21, 22) are electrically connected to one another.

14. Small mammal deterrent device (10) according to claim 13, wherein the plurality of high-voltage cables (20) forms a cable network in a star topology or a ring topology.

15. Motor vehicle having a small mammal deterrent device (10) according to one of claims 8 to 14, which is arranged in the engine compartment of the motor vehicle.

16. Method (M) for operating a small mammal deterrent device (10) installed in a motor vehicle, comprising:
connecting (M1) a housing (7) of a small mammal deterrent device (10), having a high-voltage generator (8), with at least one high-voltage cable (20), which has a base body (26) made from an electrically insulating material, a first electrically conductive high-voltage line (21), which runs substantially along a longitudinal extension of the high-voltage cable (20) at least in sections completely within the base body (26), and a second electrically conductive high-voltage line (22), which runs substantially parallel to the first high-voltage line (21) at a line spacing (D) at least in sections completely within the base body (26), wherein the high-voltage lines (21, 22) protrude along the longitudinal extension of the high-voltage cable (20) at a plurality of points (23) through a surface (28) of the base body (26) oriented substantially perpendicular to the longitudinal extension of the high-voltage cable (20); and
supplying (M2) at least one of the first and second high-voltage lines (21, 22) with high voltage via the high-voltage generator (8).

## Revendications

1. Câble haute tension (20) comprenant :
un corps de base (26) fabriqué dans un matériau électriquement isolant ;
une première ligne haute tension électriquement conductrice (21) qui s'étend essentiellement le long d'une extension longitudinale du câble haute tension (20) au moins par sections entièrement à l'intérieur du corps de base (26) ; et une deuxième ligne haute tension électriquement conductrice (22) qui s'étend essentiellement parallèlement à la première ligne haute tension (21), à une distance (D) entre les lignes, au moins par sections entièrement à l'intérieur du corps de base (26),
dans lequel la première ligne haute tension (21) et la deuxième ligne haute tension (22) font saillie en plusieurs endroits (23) le long de l'extension longitudinale du câble haute tension (20) à travers une surface (28) du corps de base (26) orientée essentiellement perpendiculaire à l'extension longitudinale du câble haute tension (20).

2. Câble haute tension (20) selon la revendication 1, dans lequel la première ligne haute tension (21) et la deuxième ligne haute tension (22) sont fabriquées en fil d'acier inoxydable ou en fil d'or.

3. Câble haute tension (20) selon l'une des revendications 1 et 2, dans lequel les sections de la première ligne haute tension (21) et de la deuxième ligne haute tension (22) qui font saillie à travers la surface (28) du corps de base (26) orientée essentiellement perpendiculaire à l'extension longitudinale du câble haute tension (20) forment un contour triangulaire, arqué, rectangulaire ou en forme de broche.

4. Câble haute tension (20) selon la revendication 3, dans lequel les sections de la première ligne haute tension (21) et de la deuxième ligne haute tension (22) qui font saillie à travers la surface (28) du corps de base (26) orientée essentiellement perpendiculaire à l'extension longitudinale du câble haute tension (20) présentent une hauteur comprise dans une plage entre 0,1 mm et 20 mm, en particulier entre 0,2 mm et 10 mm, au-dessus de la surface (28) du corps de base (26).

5. Câble haute tension (20) selon l'une des revendications 1 à 4, dans lequel des sections adjacentes de la première ligne haute tension (21) et de la deuxième ligne haute tension (22) qui font saillie à travers la surface (28) du corps de base (26) orientée essentiellement perpendiculaire à l'extension longitudinale du câble haute tension (20) présentent une distance (d) comprise dans une plage entre 1 cm et 5 cm le long de l'extension longitudinale du câble haute tension (20).

6. Câble haute tension (20) selon l'une des revendications 1 à 5, dans lequel la première ligne haute tension (21) et la deuxième ligne haute tension (22) s'étendent parallèlement à l'intérieur du corps de base (26) à une distance comprise dans une plage entre 2 mm et 2 cm, en particulier entre 4 mm et 10 mm.

7. Câble haute tension (20) selon l'une des revendications 1 à 6, dans lequel le matériau électriquement isolant du corps de base (26) comporte du polyuréthane, du chlorure de polyvinyle, du silicone ou une combinaison de ces matériaux.

8. Dispositif de défense contre les petits mammifères (10) comprenant :
au moins un câble haute tension (20) selon l'une des revendications 1 à 7 ; et
un générateur haute tension (8) qui est conçu pour alimenter au moins l'une des lignes haute tension (21, 22) du câble haute tension (20) en haute tension électrique pour son fonctionnement.

9. Dispositif de défense contre les petits mammifères (10) selon la revendication 8, comprenant en outre :
une unité d'actionneur (2) qui est conçue pour produire un effet de défense afin de chasser un petit mammifère.

10. Dispositif de défense contre les petits mammifères (10) selon la revendication 8 ou 9, comprenant en outre :
un moyen de surveillance (4) qui est couplé à des composants électriques du dispositif de défense contre les petits mammifères (10) et qui est conçu pour surveiller l'état de fonctionnement du dispositif de défense contre les petits mammifères (10) ; et
un transpondeur RFID passif ou semi-passif (5) qui est couplé au moyen de surveillance (4) et qui est conçu pour envoyer un signal d'état de fonctionnement représentant l'état de fonctionnement du dispositif de défense contre les petits mammifères (10) à un lecteur RFID via une interface RFID sans fil.

11. Dispositif de défense contre les petits mammifères (10) selon l'une des revendications 8 à 10, comprenant en outre :
un réservoir d'énergie électrique (3) qui est couplé au câble haute tension (20) via le générateur haute tension (8) et qui est conçu pour alimenter les lignes haute tension (21, 22) du câble haute tension (20) en haute tension électrique pour leur fonctionnement.

12. Dispositif de défense contre les petits mammifères (10) selon la revendication 11, dans lequel le réservoir d'énergie électrique (3) comporte une batterie ou un accumulateur.

13. Dispositif de défense contre les petits mammifères (10) selon l'une des revendications 8 à 12, qui présente une pluralité de câbles haute tension (20) qui sont reliés entre eux par paires au moyen de connexions serties, soudées, vissées, de liaisons par serrage ou par couplage, de telle sorte que les première et deuxième lignes haute tension respectives (21, 22) sont reliées électriquement entre elles.

14. Dispositif de protection contre les petits mammifères (10) selon la revendication 13, dans lequel la pluralité de câbles haute tension (20) forme un réseau de câbles dans une topologie en étoile ou une topologie en anneau.

15. Véhicule automobile équipé d'un dispositif de protection contre les petits mammifères (10) selon l'une des revendications 8 à 14, qui est disposé dans le compartiment moteur du véhicule automobile.

16. Procédé (M) pour faire fonctionner un dispositif de protection contre les petits mammifères (10) installé dans un véhicule automobile, consistant à :
relier (M1) un boîtier (7) d'un dispositif de protection contre les petits mammifères (10) présentant un générateur haute tension (8) à au moins un câble haute tension (20) qui présente un corps de base (26) fabriqué dans un matériau électriquement isolant, une première ligne haute tension électriquement conductrice (21) qui s'étend essentiellement le long d'une extension longitudinale du câble haute tension (20) au moins par sections entièrement à l'intérieur du corps de base (26), et une deuxième ligne haute tension électriquement conductrice (22) qui s'étend essentiellement parallèlement à la première ligne haute tension (21), à une distance (D) entre les lignes, au moins par sections, entièrement à l'intérieur du corps de base (26), les lignes haute tension (21, 22) faisant saillie en plusieurs endroits (23) le long de l'extension longitudinale du câble haute tension (20) à travers une surface (28) du corps de base (26) orientée essentiellement perpendiculaire à l'extension longitudinale du câble haute tension (20) ; et
appliquer (M2) une haute tension à au moins l'un des première et deuxième lignes haute tension (21, 22) au moyen du générateur haute tension (8).
